Europäisches Patentamt

European Patent Office

Office européen des brevets

(19)

(11) Publication number: **0 071 981 B2**

(12)

# NEW EUROPEAN PATENT SPECIFICATION

(45) Date of publication of the new patent specification:
**19.10.94**

(21) Application number: **82107060.4**

(22) Date of filing: **04.08.82**

(51) Int. Cl.⁵: **C08J 9/22**, B29C 67/22,
B29C 67/24, //(C08J9/22,
C08L23:10)

(54) **Foamed molded articles of polypropylene resin.**

(30) Priority: **05.08.81 JP 122716/81**

(43) Date of publication of application:
**16.02.83 Bulletin 83/07**

(45) Publication of the grant of the patent:
**08.04.87 Bulletin 87/15**

(45) Mention of the opposition decision:
**19.10.94 Bulletin 94/42**

(84) Designated Contracting States:
**DE FR GB**

(56) References cited:
**EP-A- 0 053 333**
**EP-A- 0 068 467**
**AT-B- 274 392**
**JP-A-56 001 344**

(73) Proprietor: **Japan Styrene Paper Corporation**
**1-1, 2-chome, Uchisaiwai-cho**
**Chiyoda-ku Tokyo (JP)**

(72) Inventor: **Hirosawa, Kuninori**
**923-48, Numame**
**Isehara-shi Kanagawa-ken (JP)**
Inventor: **Kuwabara, Hideki**
**Hatano Mansion B 609**
**2044 Minamiyana**
**Hatano-shi Kanagawa-ken (JP)**
Inventor: **Shimada, Sumio**
**203-11-803, Takamura**
**Hiratsuka-shi Kanagawa-ken (JP)**

(74) Representative: **Glaeser, Joachim, Dipl.-Ing.**
**Patentanwalt,**
**Postfach 80603**
**D-80603 München (DE)**

EP 0 071 981 B2

Rank Xerox (UK) Business Services
(3.10/3.09/3.3.3)

## Description

This invention relates to a foamed and molded article of a polypropylene resin in form of an ethylene/propylene random copolymer with an ethylene content of 1 to 5 % by weight.

A molded article obtained by filling preliminarily-foamed particles into a mold capable of enclosing the particles but allowing escape of gases therefrom, and heating the particles to expand them to the configuration of the mold has been known. This so-called bead molded article has found a wide range of applications as cushioning, packaging, thermal insulating and building materials, etc. because of its inherent properties, and a demand for it has greatly increased in recent years.

In particular, molded articles of this kind made of foamed polystyrene have been in commercial use heretofore as, for example, cushioning materials because of their excellent compression hardness. Since, however, they are susceptible to buckling and have a high compression set, their cushioning property shows a marked degradation upon application of repeating impacts or they undergo considerable dimensional change after exertion of loads. In an attempt to remedy this defect, molded articles composed of crosslinked polyethylene foam were proposed. These molded articles have the advantage of possessing a low compression set but because of their low compression hardness, a clear yield point is not observed when a compression stress is exerted. Thus, they have the defect of being susceptible to deformation even under a slight stress. In order to eliminate the defects of the foamed polystyrene and the crosslinked polyethylene foam, various attempts have been made to obtain foamed articles based on a polypropylene resin by making use of its superior properties. The technique of manufacturing such foamed articles, however, is difficult, and bead molded articles having a high expansion ratio have not yet been obtained although low-expansion sheet-like products have in fact been successfully manufactured.

It is an object of this invention to provide a foamed and molded article of a polypropylene resin free from the aforesaid defects of the prior art.

We have made extensive investigations in order to achieve this object, and found that in order to obtain a foamed molded article of a polypropylene resin having excellent heat resistance, flexibility, compression hardness, cushioning properties and mechanical strength and a low compression set, it is necessary to specify its heat of crystallization and density and the number of cells per $mm^2$ of its cross section. It has been consequently found that a foamed molded article of a polypropylene resin in form of an ethylene/propylene random copolymer with an ethylene content of 1 to 5 % by weight having good properties mentioned above can be obtained when it has a heat of crystallization of from 37.7 to 117.2 J/g and a density of from 0.026 to 0.060 $g/cm^3$ and contains not more than 150 cells per $mm^2$ of its cross section.

Thus, according to this invention, there is provided a foamed and molded article of a polypropylene resin in form of an ethylene/propylene random copolymer with an ethylene contact of 1 to 5 % by weight characterized by having a heat of crystallization of from 37.7 to 117.2 J/g, a density of from 0.026 to 0.060 $g/cm^3$ and such a cellular structure that the number of cells per $mm^2$ of its cross section is not more than 150, said article being obtained by filling preliminarily-foamed particles of the polypropylene resin in a mold capable of enclosing the particles but allowing escape of gases therefrom, and heating said particles to expand them to the configuration of the mold.

The polypropylene resin may be in the crosslinked or non-crosslinked state, but a crosslinked one is preferred because if can be re-utilized.

The polypropylene foam constituting the molded article of this invention should have a heat of crystallization of from 37.7 to 117.2 J/g, preferably from 37.5 to 104.6 J/g. If the heat of crystallization is less than 37.5 J/g, the polypropylene resin does not have sufficient heat resistance, and has reduced compression hardness and mechanical strength. If if exceeds 117.2 J/g, the melt-adhesion of the foamed particles to each other is poor, and the mechanical strength characteristics, such as tensile strength, of the foamed article are reduced. The heat of crystallization denotes heat generated during crystallization, and can be measured by differential scanning calorimetry. Specifically, a test specimen of the resin is heated to 200°C at a rate of 10°C/min and then its temperature is lowered at a rate of 10°C/min. The amount of heat which is generated during temperature lowering is measured, and the heat of crystallization is determined.

The polypropylene resin foam constituting the molded article of this invention should also have a density of from 0.026 to 0.060 $g/cm^3$. If it is less than 0.026 $g/cm^3$, the compression hardness of the foamed article is too low and the foamed article is liable to be compressed when a stress is exerted thereon. If, on the other hand, it exceeds 0.060 $g/cm^3$, the compression hardness of the foamed article is so high that its cushioning property is not sufficient.

The polypropylene resin foam constituting the molded article of this invention should further have such a cellular structure that the number of cells per $mm^2$ of its cross section is not more than 150.

The molded article of this invention can be produced, for example, by the following method.

In a closed vessel, particles of a polypropylene resin and a volatile blowing agent are dispersed in water in the presence of a dispersing agent, and heated to a temperature above the temperature at which the resin particles are softened, thereby impregnating the blowing agent in the particles. Thereafter, one end of the vessel is opened, and while the inside of the vessel is maintained at a predetermined pressure, the resin particles and water are simultaneously released from the vessel into an atmosphere kept at a lower pressure than the vessel. Thus, preliminarily-foamed articles are prepared. Examples of the volatile blowing agent used for this purpose include aliphatic hydrocarbons such as propane and butane, alicyclic hydrocarbons such as cyclobutane and cyclopentane, and halogenated hydrocarbons such as trichlorofluoromethane and dichlorodifluoromethane. The blowing agent is used in an amount of usually 10 to 40 parts by weight per 100 parts by weight of the resin particles. Examples of the dispersing agent are finely divided aluminum oxide and titanium oxide. The dispersing agent is used in an amount of usually 0.04 to 2.0 parts by weight per 100 parts by weight of the resin particles. In the preliminary foaming step the heating temperature is selected from temperatures which favorably lead to the foaming of the resin particles without breakage. The pressure of the inside of the vessel is approximately the vapor pressure of the blowing agent.

Then, the preliminarily-foamed particles are aged under pressure in a pressure vessel usually under a pressure of 1.96 to 4.9 bar for 20 to 100 hours using an inorganic gas such as air and nitrogen or a mixture of the inorganic gas and a volatile blowing agent.

After aging under pressure, the preliminarily-foamed particles are filled in a mold capable of enclosing the particles but allowing escape of gases therefrom, and heated with pressurized steam under a pressure of 1.96 to 4.9 bar thereby expanding the particles and melt-adhering the particles to each other. As a result, the molded article of this invention conforming to the configuration of the mold is obtained.

The molded article of this invention is used in a variety of applications including cushioning, packaging, thermal insulating, dew-preventing and building materials, automotive parts, and sundries.

As stated above, the present invention provides a foamed molded article which can find a wide range of applications because of its excellent heat resistance, moderate flexibility, moderate compression hardness, excellent cushioning property, high mechanical strength and low compression set. In particular, when the molded article of the invention is used as a cushioning material, it exhibits ideal properties; namely, it is not too hard nor too soft and has high stiffness. Hence, it is beneficial in practical applications.

The following examples illustrate the present invention specifically.

Examples

A closed vessel was charged with 100 parts by weight of particles of each of the polypropylene resins shown in Table 1, a predetermined amount of dichlorodifluoromethane (volatile blowing agent), 0.5 part by weight of aluminum oxide (dispersing agent) and 250 parts by weight of water. While the resin particles were dispersed in water by stirring, the temperature of the contents was raised to each of the points shown in Table 1 and the contents were maintained at this temperature for 0.5 hour. While maintaining the pressure of the inside of the vessel at about 29.4 bar, one end of the vessel was opened, and the resin particles and water were simultaneously released into the atmosphere. The resin particles were dried to obtain preliminarily-foamed particles having the densities shown in Table 1.

The resulting preliminarily-foamed particles were left to stand at room temperature and atmospheric pressure for 50 hours, pressurized with air under 1.96 bar at a temperature of 20°C for 50 hours, then filled in a mold, and molded under a steam pressure of 1.96 to 3.92 bar. The properties of the molded articles are shown in Table 2.

A foamed molded article was produced by the same method as described above except that particles of cross-linked polyethylene were used instead of the polypropylene resin particles (Comparison 7). Its properties are also shown in Table 2.

Table 2 also gives the properties of a commercial polystyrene molded article (Comparison 6) for information.

TABLE 1

| | Run | Starting resin | | Preliminarily foamed particles | | |
|---|---|---|---|---|---|---|
| | | Type | Heat of crystallization (J/g) | Amount of dichloro-difluoromethane (parts by weight) | Preliminary foaming temperature (°C) | Bulk density (g/cm$^3$) |
| Invention | 1 | Propylene/ethylene random copolymer (ethylene content 3.8% by weight) | 81.2 | 14 | 139 | 0.053 |
| | 2 | Ditto (ethylene content 2.5% by weight) | 100.8 | 17 | 144 | 0.028 |
| | 3 | Ditto (ethylene content 5.0% by weight) | 43.1 | 17 | 136 | 0.025 |
| Comparison | 1 | Propylene/ethylene random copolymer (ethylene content 2.5% by weight) | 100.8 | 13 | 143 | 0.100 |
| | 2 | Ditto | 100.8 | 18 | 146 | 0.019 |
| | 3 | Ditto | 100.8 | 21 | 143 | 0.028 |
| | 4 | Propylene homopolymer | 125.5 | 18 | 155 | 0.027 |
| | 5 | Propylene/ethylene random copolymer (ethylene content 10.0% by weight) | 34.7 | 16 | 132 | 0.026 |
| | 6 | Polystyrene | — | — | — | — |
| | 7 | Crosslinked polyethylene | 112.1 | 28 | 110 | 0.033 |

**TABLE 2**

| Run | | Number of cells per mm² | Density (g/cm³) | Compression set(*1) | | Compression hardness(*2) | | Tensile strength(*3) | | Flexibility (NDS Z0503)(*4) | Heat resistance(*5) | |
|---|---|---|---|---|---|---|---|---|---|---|---|---|
| | | | | Measured value (%) | (*6) Rating | Measured value (bar) | (*7) Rating | Measured value (bar) | (*8) Rating | | Measured value (%) | (*9) Rating |
| Invention | 1 | 100 | 0.055 | 9 | ○ | 2.25 | ○ | 7.84 | ○ | No change | -2 | ○ |
| | 2 | 60 | 0.030 | 10 | ○ | 1.08 | ○ | 4.5 | ○ | Ditto | -3 | ○ |
| | 3 | 150 | 0.027 | 10 | ○ | 0.98 | ○ | 2.15 | ○ | Ditto | -7 | ○ |
| Comparison | 1 | 200 | 0.100 | 9 | ○ | 3.92 | △ | 8.91 | ○ | Fractured | -2 | ○ |
| | 2 | 150 | 0.020 | 14 | ○ | 0.66 | × | 5.19 | ○ | No change | -7 | ○ |
| | 3 | 400 | 0.030 | 9.5 | ○ | 1.08 | ○ | 4.21 | ○ | Fractured | -4 | ○ |
| | 4 | 150 | 0.031 | 8.0 | ○ | 1.47 | ○ | Below 0.098 | × | Ditto | -1 | ○ |
| | 5 | 100 | 0.023 | 8.5 | ○ | 0.78 | ○ | 3.33 | ○ | No change | -40 | × |
| | 6 | above 500 | 0.026 | 22 | × | 1.76 | ○ | 3.53 | ○ | Fractured | -90 | × |
| | 7 | 50 | 0.036 | 4 | ○ | 0.58 | × | 3.13 | ○ | No change | -80 | × |

Note to Table 2

(*1), (*2) and (*3): Measured in accordance with JIS K6767.

(*4): Measured in accordance with NDS Z0503. A test specimen having a thickness of 20 mm was bent 180° along a cylindrical shaft having a diameter of 60 mm, and its appearance was observed.

(*5): A test specimen was heated at 100°C for 24 hours, and a change in its volume was measured. The symbol "–" shows that the specimen shrank.

(*6): Measured values of 15% or less are indicated by ○, and measured values larger than 15%, by X.

(*7): Measured values of 0.78 to 3.43 bar are indicated by ○; measured values of more than 3.43 bar by △; and measured values of less than 0.78 bar, by X.

(*8): Measured values of at least 0.098 bar are indicated by ○, and measured values of less than 0.098 bar, by X.

(*9): ○ shows that absolute values of measured values (%) are not more than 20, and X shows that absolute values are larger than 20.

**Claims**

1. A foamed and molded article of a polypropylene resin in form of an ethylene/propylene random copolymer with an ethylene content of 1 to 5 % by weight characterized by having a heat of

5

crystallization of from 37.5 to 117.2 J/g, a density of from 0.026 to 0.060 $g/cm^3$ and such a cellular structure that the number of cells per $mm^2$ of its cross section is not more than 150, said article being obtained by filling preliminarily-foamed particles of the polypropylene resin in a mold capable of enclosing the particles but allowing escape of gases therefrom, and heating said particles to expand them to the configuration of the mold.

2. The article of claim 1 which has a heat of crystallization of from 37.5 to 104.6 J/g.

**Patentansprüche**

1. Geschäumter Formkörper aus Polypropylen in Form eines Ethylen-Propylen-Random-Copolymers mit einem Ethylengehalt von 1 bis 5 Gew.-%, gekennzeichnet durch eine Kristallisationswärme von 37,5 bis 117,2 J/g, eine Dichte von 0,026 bis 0,060 $g/cm^3$ und eine solche Zellstruktur, daß die Anzahl der Zellen pro $mm^2$ im Querschnitt des Formkörpers nicht mehr als 150 beträgt, wobei der Formkörper erhalten worden ist durch Einfüllen von vorgeschäumten Teilchen des Polypropylenharzes in eine Form, die in der Lage ist, die Teilchen einzuschließen, jedoch ein Entweichen von Gasen daraus gestattet, und durch Erhitzen der genannten Teilchen, um sie zu der Gestalt der Form zu expandieren.

2. Formkörper nach Anspruch 1, der eine Kristallisationswärme von 37,5 bis 104,6 J/g aufweist.

**Revendications**

1. Un article moussé et moulé en une résine de polypropylène, en un copolymère séquencé (statistique) éthylène / propylène d'une teneur en éthylène de 1 à 5 % en poids, caractérisé en ce qu'il a une chaleur de cristallisation de 37,7 à 177,2 J/g, une masse volumique de 0,026 à 0,060 $g/cm^3$et une structure cellulaire telle que le nombre de cellules par $mm^2$ de section droite ne dépasse pas 150 , article que l'on obtient en mettant des particules préalablement moussées de la résine de polypropylène dans un moule pouvant les retenir tout en laissant s'échapper les gaz, et en chauffant ces particules pour les dilater pour qu'elles prennent la forme du moule.

2. L'article selon la revendication 1 qui a une chaleur de cristallisation de 37,5 à 104,6 J/g.